# EUROPÄISCHE PATENTSCHRIFT

(11) **EP 4 018 276 B1**
(45) Veröffentlichungstag und Bekanntmachung des Hinweises auf die Patenterteilung: **20.11.2024**
(21) Anmeldenummer: 20780962.5
(22) Anmeldetag: 16.09.2020
(51) Int. Cl.: G05B 23/02

(54) **ERWEITERTE TRENDANZEIGE VON PROZESSDATEN UND SEKUNDÄRALARMEN**
EXTENDED TREND DISPLAY OF PROCESS DATA AND SECONDARY ALARMS
AFFICHAGE AVANCÉ DE TENDANCE DES DONNÉES DE PROCESSUS ET DES ALARMES SECONDAIRES

(30) Priorität: 23.09.2019 EP 19198967
(43) Veröffentlichungstag der Anmeldung: 29.06.2022
(73) Patentinhaber: Siemens Aktiengesellschaft, 80333 München (DE)
(72) Erfinder: LUTZ, Benjamin, 76327 Pfinztal (DE)
(74) Vertreter: Siemens Patent Attorneys
(86) Internationale Anmeldenummer: PCT/EP2020/075820
(87) Internationale Veröffentlichungsnummer: WO 2021/058344

(56) Entgegenhaltungen:
- EP-A2- 3 093 770
- DE-A1- 102012 110 132
- DE-A1- 102017 219 549
- US-A1- 2004 113 912
- US-A1- 2017 248 942

## Beschreibung

Die vorliegende Erfindung geht aus von einem Visualisierungsverfahren für Prozessdaten durch ein Visualisierungssystem,
- wobei eine industrielle technische Anlage von einem Prozessleitsystem gesteuert und überwacht wird,
- wobei das Prozessleitsystem zu Erfassungszeitpunkten jeweils die Prozessdaten erfasst und die erfassten Prozessdaten im Sinne einer Historie archiviert,
- wobei das Visualisierungssystem aufgrund der Selektion eines Prozessdatums und der Vorgabe eines zugehörigen Darstellungszeitraums durch mindestens eine Bedienperson vom Prozessleitsystem für den vorgegebenen Darstellungszeitraum die Historie des selektierten Prozessdatums anfordert und den zugehörigen zeitlichen Verlauf als Grafik an die mindestens eine Bedienperson ausgibt,
- wobei die Grafik eine Anzahl von Prozessdatenpunkten umfasst,
- wobei das Visualisierungssystem den jeweiligen Prozessdatenpunkt anhand der Werte des selektierten Prozessdatums eines für den jeweiligen Prozessdatenpunkt charakteristischen jeweiligen Erfassungszeitraums ermittelt,
- wobei der jeweilige Prozessdatenpunkt ein Mittelwert oder ein Medianwert der Prozessdaten des jeweiligen Erfassungszeitraums ist.

Die vorliegende Erfindung geht weiterhin aus von einem Computerprogramm für ein Visualisierungssystem, wobei das Computerprogramm Maschinencode umfasst, der von dem Visualisierungssystem abarbeitbar ist,
- wobei das Visualisierungssystem aufgrund der Abarbeitung des Maschinencodes aufgrund der Selektion eines Prozessdatums und der Vorgabe eines zugehörigen Darstellungszeitraums durch mindestens eine Bedienperson von einem eine industrielle technische Anlage steuernden und überwachenden und das Prozessdatum zu Erfassungszeitpunkten erfassenden und jeweils im Sinne einer Historie archivierenden Prozessleitsystem für den vorgegebenen Darstellungszeitraum die Historie des selektierten Prozessdatums anfordert und den zugehörigen zeitlichen Verlauf als Grafik an die mindestens eine Bedienperson ausgibt,
- wobei die Grafik eine Anzahl von Prozessdatenpunkten umfasst,
- wobei das Visualisierungssystem aufgrund der Abarbeitung des Maschinencodes den jeweiligen Prozessdatenpunkt anhand der Werte des selektierten Prozessdatums eines für den jeweiligen Prozessdatenpunkt charakteristischen jeweiligen Erfassungszeitraums ermittelt,
- wobei der jeweilige Prozessdatenpunkt ein Mittelwert oder ein Medianwert der Prozessdaten des jeweiligen Erfassungszeitraums ist.

Die vorliegende Erfindung geht weiterhin aus von einem Visualisierungssystem, wobei das Visualisierungssystem mit einem derartigen Computerprogramm programmiert ist, so dass das Visualisierungssystem im Betrieb die vorstehend in Verbindung mit dem Computerprogramm angegebenen Verfahrensschritte ausführt.

Die Prozessdaten können beispielsweise Istgrößen oder Sollgrößen eines Reglers sein. Der Mittelwert kann alternativ ein gewichteter oder ein ungewichteter Mittelwert sein. Der Medianwert kann insbesondere ein xx-%-Medianwert sein, wobei xx ein geeigneter Wert ist.

Für die Bedienung und Beobachtung von verfahrenstechnischen Anlagen sind sogenannte Prozessobjektansichten von großer Bedeutung. In zugehörigen Anlagenbildern werden für die Prozessobjekte sogenannte Blocksymbole integriert, die neben einem wichtigen Prozesswert auch verschiedene Statusinformationen wie beispielsweise Prozessalarme oder Simulationsergebnisse grafisch darstellen. Ausgehend von den Blocksymbolen können für die Prozessobjekte auch Ansichten geöffnet werden, die neben der reinen Beobachtung eines Prozessobjekts auch dessen Bedienung ermöglichen. Ausgehend von derartigen Ansichten können weitere Ansichten geöffnet werden, beispielsweise Trendkurven oder eine Alarmansicht mit den für das jeweilige Prozessobjekt relevanten Prozessalarmen. Trendkurven zeigen üblicherweise den Verlauf eines jeweiligen Prozesswertes als Funktion der Zeit. Prozessalarme werden meist in Form einer Meldefolgeanzeige dargestellt, d.h. in Form einer chronologischen Liste der jeweils aufgetretenen Prozessalarme. Die Darstellung einer Trendkurve, das heißt der zeitliche Verlauf der ermittelten Prozessdatenpunkte, entspricht dem Stand der Technik, von dem im Rahmen der vorliegenden Erfindung ausgegangen wird.

Im Stand der Technik sind auch schon Ansätze bekannt, Trendkurven mit geeigneten Informationen über Sekundäralarme anzureichern. Sekundäralarme sind Alarme, die nicht vom Prozessleitsystem, sondern vom Visualisierungssystem gesetzt werden. Bei einem Sekundäralarm prüft das Visualisierungssystem für den jeweiligen Prozessdatenpunkt ob der ermittelte Mittelwert oder Medianwert eine von der Bedienperson festgelegte Bedingung erfüllt. Wenn - rein beispielhaft ein Prozessalarm ausgelöst wird, sobald ein Prozessdatum den Wert x überschreitet, kann die Bedienperson beispielsweise festlegen, dass ein Sekundäralarm angezeigt wird, wenn der für den jeweiligen Prozessdatenpunkt ermittelte Wert den Wert y überschreitet, wobei der Wert y in einem hinreichenden Ausmaß unterhalb des Wertes x liegt. In analoger Weise kann vorgegangen werden, wenn geprüft werden soll, ob der für den jeweiligen Prozessdatenpunkt ermittelte Wert einen Wert z unterschreitet. Im Falle eines Sekundäralarms kann beispielsweise der entsprechende Bereich der Trendkurve farblich hervorgehoben werden.

Die genannte Vorgehensweise führt zu guten Ergebnissen, sofern der von der Bedienperson vorgegebene Darstellungszeitraum hinreichend klein ist, so dass die Anzahl von Prozessdatenpunkten mindestens so groß wie die während des Darstellungszeitraums erfasste Anzahl an Prozessdaten ist. In aller Regel gibt die Bedienperson den Darstellungszeitraum jedoch derart vor, dass die Anzahl von Prozessdatenpunkten kleiner als die während des Darstellungszeitraums erfasste Anzahl an Prozessdaten ist, oftmals sogar erheblich kleiner. In diesem Fall kann es geschehen, dass aufgrund der Mittelwertbildung bzw. Medianwertbildung und der hiermit verbundenen Glättung nicht mehr erkannt wird, dass die während eines bestimmten Erfassungszeitraums erfassten Prozessdaten einmal oder mehrmals den Wert y überschreiten oder den Wert z unterschreiten. In noch größerem Ausmaß stellt sich dieses Problem, wenn aufgrund der Trendkurven in die Zukunft gerichtete Prognosen erstellt werden. Auch derartige Prognosen werden durch die mit der Mittelwertbildung bzw. Medianwertbildung verbundene Glättung in erheblichem Umfang verfälscht. US 2017/248942 A1 beschreibt das Anzeigen eines zeitlichen Werteverlaufs einer Prozessmessgröße.

Die Aufgabe der vorliegenden Erfindung besteht darin, Möglichkeiten zu schaffen, die es der Bedienperson ermöglichen, eine Trendkurve zuverlässig auswerten zu können. Weiterhin sollen Prognosen möglichst zuverlässig möglich sein.

Die Aufgabe wird durch ein Visualisierungsverfahren mit den Merkmalen des Anspruchs 1 gelöst. Vorteilhafte Ausgestaltungen des Visualisierungsverfahrens sind Gegenstand der abhängigen Ansprüche 2 bis 4.

Erfindungsgemäß wird ein Visualisierungsverfahren der eingangs genannten Art dadurch ausgestaltet,
- dass das Visualisierungssystem für den jeweiligen Prozessdatenpunkt auch das Minimum und/oder das Maximum der Werte des selektierten Prozessdatums während des jeweiligen Erfassungszeitraums ermittelt und
- dass das Visualisierungssystem immer dann, wenn das für den jeweiligen Prozessdatenpunkt ermittelte Minimum einen vorgegebenen Minimalwert unterschreitet und/oder das ermittelte Maximum einen vorgegebenen Maximalwert überschreitet, zusammen mit dem jeweiligen Prozessdatenpunkt einen Sekundäralarm anzeigt.

Durch die zusätzliche Ermittlung des Minimums und/oder des Maximums und der hierauf aufbauenden Ermittlung der Sekundäralarme kann es insbesondere nicht mehr geschehen, dass ein Sekundäralarm aufgrund einer Mittelwertbildung bzw. Medianwertbildung über einen zu großen Erfassungszeitraum und damit zu viele Prozessdaten nicht mehr erkannt wird.

Vorzugsweise ist das Visualisierungsverfahren derart ausgestaltet,
- dass die Prozessdaten innerhalb des Prozessleitsystems einem jeweiligen Prozessobjekt zugeordnet sind,
- dass das Prozesssteuerungssystem jeweils automatisch einen Prozessalarm setzt, wenn die dem jeweiligen Prozessobjekt zugeordneten Prozessdaten eine vorbestimmte auslösende Bedingung erfüllen,
- dass das Prozesssteuerungssystem für jedes Prozessobjekt zu den Erfassungszeitpunkten auch die momentan gesetzten Prozessalarme erfasst und die erfassten Prozessalarme im Sinne der genannten Historie archiviert bzw. speichert,
- dass das Visualisierungssystem zusammen mit der Historie des selektierten Prozessdatums für denselben Darstellungszeitraum auch die Historie der dem jeweiligen Prozessobjekt zugeordneten Prozessalarme anfordert und
- dass das Visualisierungssystem den Prozessdatenpunkten immer dann, wenn während des dem jeweiligen Prozessdatenpunkt zugeordneten Erfassungszeitraums mindestens ein Prozessalarm aufgetreten ist, zusammen mit dem jeweiligen Prozessdatenpunkt mindestens einen der Prozessalarme mit anzeigt.

Durch das Anzeigen des Prozessalarms ist für die Bedienperson sofort erkennbar, wenn während des jeweiligen Erfassungszeitraums ein Prozessalarm aufgetreten ist. Die vorbestimmte auslösende Bedingung kann beispielsweise erfüllt sein, wenn eine der Objektgrößen einen bestimmten vorgegebenen Wert überschreitet oder unterschreitet.

Der Darstellungszeitraum kann beispielsweise die Gegenwart dann mit umfassen, wenn durch die Bedienperson eine Vorgabe des Inhalts "zeige mir das Prozessdatum x für die vergangenen y Minuten an" oder eine vergleichbare Vorgabe erfolgt. Durch die Verwertung der prognostizierten Minima und/oder Maxima bei der Prognostizierung der Sekundäralarme wird auch die Ermittlung der prognostizierten Sekundäralarme verbessert. Vorzugsweise zeigt das Visualisierungssystem weiterhin immer dann, wenn das jeweils prognostizierte Minimum und/oder das jeweils prognostizierte Maximum die vorbestimmte auslösende Bedingung erfüllt, zusammen mit dem jeweiligen prognostizierten Prozessdatenpunkt einen prognostizierten Prozessalarm an. Dadurch kann die Bedienperson zuverlässiger als im Stand der Technik erkennen, ob und wann die konkrete Gefahr eines Prozessalarms droht.

Vorzugsweise zeigt das Visualisierungssystem die ermittelten Minima und/oder die ermittelten Maxima aufgrund einer Bedieneingabe der mindestens einen Bedienperson zusammen mit den Prozessdatenpunkten an und unterdrückt die Anzeige der ermittelten Minima und/oder der ermittelten Maxima aufgrund einer hierzu inversen Bedieneingabe der mindestens einen Bedienperson. Die Bedienperson ist dadurch in der Lage, die ermittelten Minima und/oder die ermittelten Maxima nach Bedarf in die ermittelte Trendkurve einzublenden oder sie aus der ermittelten Trendkurve auszublenden.

Die Aufgabe wird weiterhin durch ein Computerprogramm mit den Merkmalen des Anspruchs 5 gelöst. Vorteilhafte Ausgestaltungen des Computerprogramms sind Gegenstand der abhängigen Ansprüche 6 bis 8.

Erfindungsgemäß wird ein Computerprogramm der eingangs genannten Art derart ausgestaltet, dass das Visualisierungssystem aufgrund der Abarbeitung des Maschinencodes
- für den jeweiligen Prozessdatenpunkt weiterhin auch das Minimum und/oder das Maximum der Werte des selektierten Prozessdatums während des jeweiligen Erfassungszeitraums ermittelt und
- immer dann, wenn das für den jeweiligen Prozessdatenpunkt ermittelte Minimum einen vorgegebenen Minimalwert unterschreitet und/oder das ermittelte Maximum einen vorgegebenen Maximalwert überschreitet, zusammen mit dem jeweiligen Prozessdatenpunkt einen Sekundäralarm anzeigt.

Die dadurch erreichten Vorteile korrespondieren mit denen des Visualisierungsverfahrens. Weiterhin korrespondieren auch die vorteilhaften Ausgestaltungen des Computerprogramms mit den vorteilhaften Ausgestaltungen des Visualisierungsverfahrens. Gleiches gilt für die durch die jeweiligen vorteilhaften Ausgestaltungen jeweils erreichten Vorteile.

Die Aufgabe wird weiterhin durch ein Visualisierungssystem mit den Merkmalen des Anspruchs 9 gelöst. Erfindungsgemäß ist ein Visualisierungssystem der eingangs genannten Art mit einem erfindungsgemäßen Computerprogramm programmiert, so dass das Visualisierungssystem im Betrieb zusätzlich auch die erfindungsgemäßen Verfahrensschritte des erfindungsgemäßen Computerprogramms ausführt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: einen Überblick über eine Anlage,
- FIG 2: ein Prozessobjekt,
- FIG 3: ein Ablaufdiagramm,
- FIG 4: ein Ablaufdiagramm,
- FIG 5: einen zeitlichen Verlauf eines Prozessdatums und eine Grafik,
- FIG 6: ein Ablaufdiagramm,
- FIG 7: einen zeitlichen Verlauf eines Prozessdatums und eine Grafik,
- FIG 8: ein Ablaufdiagramm,
- FIG 9: einen zeitlichen Verlauf eines Prozessdatums und eine Grafik und
- FIG 10: ein Ablaufdiagramm.

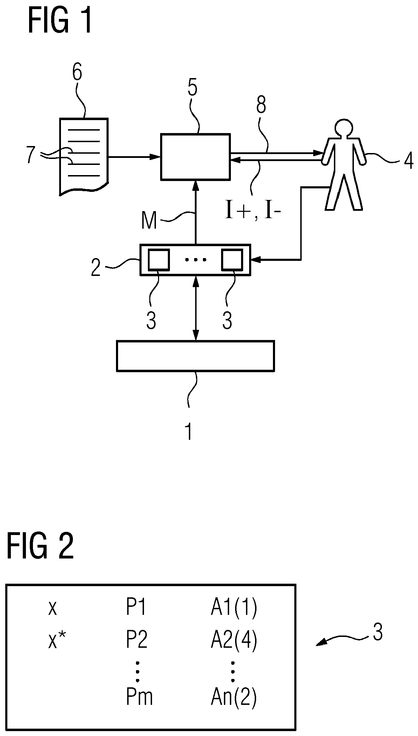

Gemäß FIG 1 wird eine industrielle technische Anlage 1 von einem Prozessleitsystem 2 gesteuert und überwacht. Die industrielle technische Anlage 1 kann beispielsweise eine verfahrenstechnische Anlage sein. Es kann sich aber auch um eine andere Anlage handeln. Das Prozessleitsystem 2 umfasst Steuereinrichtungen für einzelne Teile der industriellen technischen Anlage 1. Die Einwirkung der Steuereinrichtungen auf den jeweiligen Teil der industriellen technischen Anlage 1 und die Wechselwirkung der Steuereinrichtungen miteinander wird von übergeordneten Rechnern geführt.

Dem Prozessleitsystem 2 sind sogenannte Prozessobjekte 3 bekannt. Die Prozessobjekte 3 können beispielsweise im Rahmen einer Projektierung des Prozessleitsystems 2 festgelegt werden. Ein Beispiel eines Prozessobjekts 3 ist ein Regler, der eine Größe der industriellen technischen Anlage 1 regelt. Es gibt aber auch andere Prozessobjekte 3.

Den Prozessobjekten 3 sind entsprechend der Darstellung in FIG 2 innerhalb des Prozessleitsystems 2 jeweils Prozessdaten x, x*, Pi (i = 1, 2, ... m) zugeordnet. Die Prozessdaten x, x*, Pi können beispielsweise Istgrößen x, Sollgrößen x*, Parameter Pi eines Reglers und dergleichen mehr sein. Die Parameter Pi können beispielsweise im Falle eines PI-Reglers die Proportionalverstärkung, die Nachstellzeit und der Betrag der maximalen Ausgangsgröße des Reglers sein. Dem Prozessleitsystem 2 ist auch die Zuordnung der jeweiligen Prozessdaten x, x*, Pi zu den Prozessobjekten 3 bekannt.

In der Regel können den Prozessobjekten 3 entsprechend der Darstellung in FIG 2 weiterhin Prozessalarme Aj (j = 1, 2, ... n) zugeordnet sein. In diesem Fall ist dem Prozessleitsystem 2 auch die Zuordnung der jeweiligen Prozessalarme Aj zu den Prozessobjekten 3 bekannt. Die Prozessalarme Aj weisen jeweils eine Priorität auf. Die jeweilige Priorität ist in FIG 2 rein beispielhaft hinter dem jeweiligen Prozessalarm Aj in Klammern gesetzt.

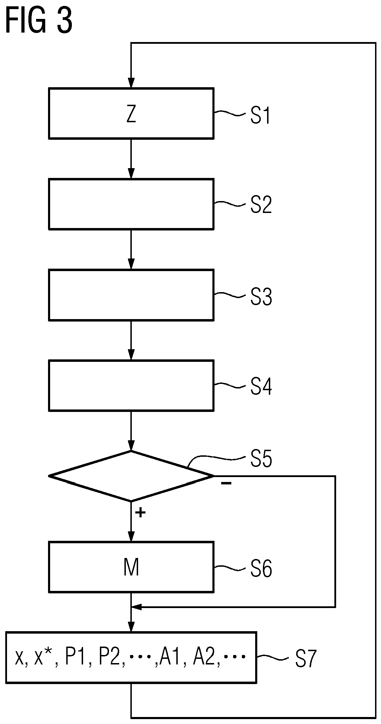

Das Prozessleitsystem 2 führt ein Steuer- und Überwachungsverfahren aus, das nachstehend in Verbindung mit FIG 3 näher erläutert wird.

Gemäß FIG 3 nimmt das Prozessleitsystem 2 in einem Schritt S1 einen aktuellen Zustand Z der industriellen technischen Anlage 1 entgegen. Der aktuelle Zustand Z umfasst insbesondere die Istgrößen x der Regler. In einem Schritt S2 nimmt das Prozessleitsystem 2 von einem Bediener 4 (siehe FIG 1) Eingaben entgegen. Die Eingaben können Vorgaben für die Prozessobjekte 3 umfassen, beispielsweise neue Sollgrößen x* für die Regler oder eine Änderung von Parametern Pi der Regler. Der Begriff "Bediener" wird im Rahmen der vorliegenden Erfindung in einem generischen Sinne verwendet. Es kann sich um einen einzelnen Bediener oder um mehrere Personen handeln.

In einem Schritt S3 bestimmt das Prozessleitsystem 2 Steuergrößen für die industrielle technische Anlage 1. Das Prozessleitsystem 2 verwertet bei der Ermittlung der Steuergrößen insbesondere die den einzelnen Prozessobjekten 3 zugeordneten Prozessdaten x, x*, Pi. In einem Schritt S4 gibt das Prozessleitsystem 2 die ermittelten Steuergrößen an die industrielle technische Anlage 1 aus und steuert dadurch die industrielle technische Anlage 1.

Sofern das Prozessleitsystem 2, wie allgemein üblich, auch Prozessalarme setzt, prüft das Prozessleitsystem 2 in einem Schritt S5, ob für einen Prozessalarm Aj eine auslösende Bedingung erfüllt ist. Die Prüfung wird von dem Prozessleitsystem 2 einzeln für jedes Prozessobjekt 3 und innerhalb des jeweiligen Prozessobjekts 3 einzeln für jeden Prozessalarm Aj ausgeführt. Die Frage, ob die jeweilige auslösende Bedingung erfüllt ist oder nicht, entscheidet das Prozessleitsystem 2 anhand derer dem jeweiligen Prozessobjekt 3 zugeordneten Prozessdaten x, x*, Pi. Die auslösende Bedingung kann beispielsweise erfüllt sein, wenn ein Prozessdatum x, x*, Pi des entsprechenden Prozessobjekts 3 - insbesondere ein Istwert x - einen bestimmten vorgegebenen Wert überschreitet oder unterschreitet oder wenn bestimmte Wertekombinationen gegeben sind oder andere abgeleitete Werte gewisse Grenzen unterschreiten oder überschreiten.

Wenn die auslösende Bedingung erfüllt ist, setzt das Prozessleitsystem 2 in einem Schritt S6 automatisch den entsprechenden Prozessalarm Aj und übermittelt eine entsprechende Alarmmeldung M an ein Visualisierungssystem 5 (siehe FIG 1). Anderenfalls, wenn also die auslösende Bedingung nicht erfüllt ist, wird der Schritt S6 übersprungen.

In einem Schritt S7 archiviert das Prozessleitsystem 2 zumindest die Prozessdaten x, x*, Pi. In der Regel archiviert das Prozessleitsystem 2 im Schritt S7 auch die momentan gesetzten Prozessalarme Aj. Das Archivieren erfolgt im Sinne einer Historie. Den jeweils archivierten Werten x, x*, Pi, Aj ist also zum einen der jeweilige Erfassungszeitpunkt zugeordnet. Weiterhin werden die bereits archivierten Werte nicht überschrieben. Vielmehr treten die neu zu archivierenden Werte zu den bereits archivierten Werten hinzu, so dass sowohl die neu zu archivierenden Werte als auch die bereits archivierten Werte zu späteren Zeitpunkten für Auswertungen zur Verfügung stehen.

Die Vorgehensweise von FIG 3 wird zyklisch immer wieder wiederholt. Vom Schritt S7 aus geht das Prozessleitsystem 2 somit wieder zum Schritt S1 über. Meist erfolgt die zyklische Wiederholung sogar mit einem festen Takt.

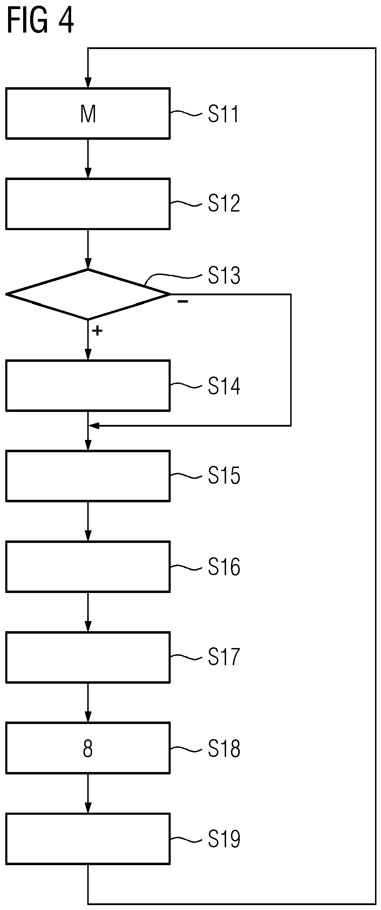

Das Visualisierungssystem 5 ist mit einem Computerprogramm 6 programmiert. Das Computerprogramm 6 umfasst Maschinencode 7, der von dem Visualisierungssystem 5 abarbeitbar ist. Aufgrund der Abarbeitung des Maschinencodes 7 führt das Visualisierungssystem 5 (unter anderem) ein Visualisierungsverfahren aus, das nachstehend in Verbindung mit FIG 4 näher erläutert wird.

In einem Schritt S11 nimmt das Visualisierungssystem 5 vom Prozessleitsystem 2 die übermittelten Alarmmeldungen M entgegen. In einem Schritt S12 gibt das Visualisierungssystem 5 die entsprechenden Prozessalarme Aj - genauer: entsprechende Meldungen - an den Bediener 4 aus. Die Ausgabe des jeweiligen Prozessalarms Aj an den Bediener 4 kann beispielsweise durch eine visuelle Anzeige erfolgen. Gegebenenfalls kann die visuelle Anzeige durch eine akustische Meldung unterstützt werden. In einem Schritt S13 prüft das Visualisierungssystem 5, ob es vom Bediener 4 eine Quittierung für den jeweiligen Prozessalarm Aj erhalten hat. Solange dies nicht der Fall ist, überspringt das Visualisierungssystem 5 einen Schritt S14. Wenn das Visualisierungssystem 5 hingegen vom Bediener 4 eine Quittierung für den entsprechenden Prozessalarm Aj erhalten hat, terminiert das Visualisierungssystem 5 im Schritt S14 das Ausgeben des jeweiligen Prozessalarms Aj an den Bediener 4.

Die Schritte S11 bis S14 als solche sind in der Regel zwar vorhanden, im Rahmen des Grundprinzips der vorliegenden Erfindung aber von untergeordneter Bedeutung.

In einem Schritt S15 nimmt das Visualisierungssystem 5 vom Bediener 4 eine Selektion eines Prozessdatums x, x*, Pi entgegen. Der Bediener 4 kann im Schritt S15 prinzipiell ein beliebiges Prozessdatum x, x*, Pi selektieren. Oftmals wird es sich aber um einen Istwert x handeln. Im Schritt S15 nimmt das Visualisierungssystem 5 vom Bediener 4 weiterhin einen Darstellungszeitraum entgegen. Da der Darstellungszeitraum vom Bediener 4 festgelegt wird, ist - aus Sicht des Visualisierungssystems 5 - nicht vorab bekannt, welche Größe der Darstellungszeitraum aufweist. Aus Sicht des Visualisierungssystems 5 kann der Darstellungszeitraum somit prinzipiell beliebig sein.

In einem Schritt S16 fordert das Visualisierungssystem 5 vom Prozessleitsystem 2 für den vorgegebenen Darstellungszeitraum zumindest die Historie des selektierten Prozessdatums x, x*, Pi an. In der Regel fordert das Visualisierungssystem 5 im Schritt S16 vom Prozessleitsystem 2 zugleich auch für denselben Darstellungszeitraum die Historie der dem jeweiligen Prozessobjekt 3 zugeordneten Prozessalarme Aj an. In einem Schritt S17 nimmt das Visualisierungssystem 5 vom Prozessleitsystem 2 die angeforderten Prozessdaten x, x*, Pi und gegebenenfalls auch die angeforderten Prozessalarme Aj entgegen.

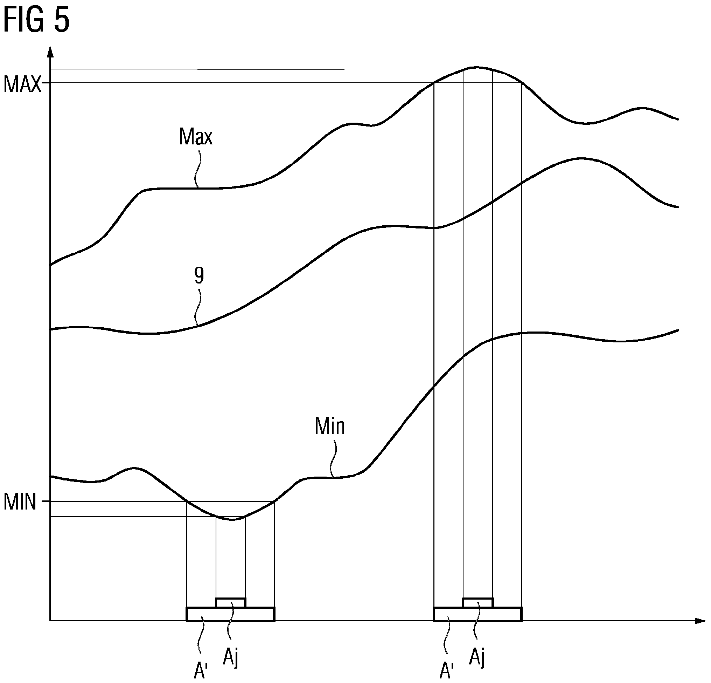

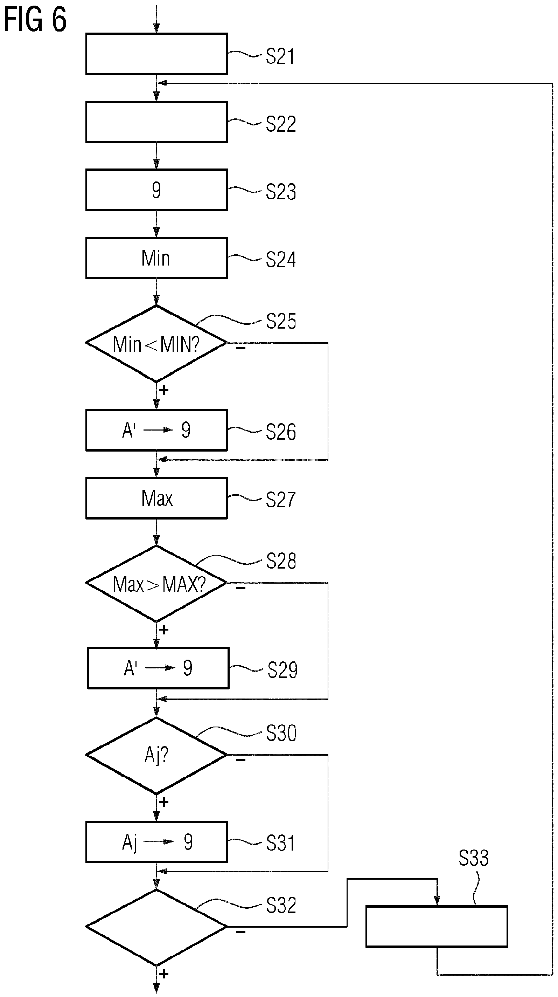

In einem Schritt S18 ermittelt das Visualisierungssystem 5 eine Grafik 8 (siehe FIG 1 und 5). Die Grafik 8 stellt für den vorgegebenen Darstellungszeitraum den zeitlichen Verlauf des selektierten Prozessdatums x, x*, Pi dar. Den Prozessdatenpunkten 9 können Sekundäralarme A' zugeordnet sein. Die Sekundäralarme A' werden ebenfalls im Schritt S18 ermittelt. Der Schritt S18 wird in Verbindung mit FIG 6 detailliert erläutert werden. Die Grafik 8 gibt das Visualisierungssystem 5 in einem Schritt S19 an den Bediener 4 aus.

Gemäß FIG 6 selektiert das Visualisierungssystem 5 zur Ermittlung der Grafik 8 zunächst in einem Schritt S21 einen ersten Prozessdatenpunkt 9 (siehe FIG 5). In einem Schritt S22 ermittelt das Visualisierungssystem 5 für den selektierten Prozessdatenpunkt 9 einen zugehörigen Erfassungszeitraum. Der jeweilige Erfassungszeitraum kann mehrere Erfassungszeitpunkte umfassen. Wenn - beispielsweise - die Grafik 8 maximal 200 Prozessdatenpunkte 9 umfassen kann, während des gesamten Darstellungszeitraums aber 10.000 mal die Prozessdaten x, x*, Pi und gegebenenfalls auch die Prozessalarme Aj erfasst wurden, müssen zwangsweise für jeden Prozessdatenpunkt 9 die Prozessdaten x, x*, Pi und gegebenenfalls auch die Prozessalarme Aj von mehreren Erfassungszeitpunkte gemeinsam verwertet werden, um den jeweiligen Prozessdatenpunkt 9 zu ermitteln.

In einem Schritt S23 ermittelt das Visualisierungssystem 5 sodann anhand der in diesem Erfassungszeitraum archivierten Werte des selektierten Prozessdatums x, x*, Pi den zugehörigen Wert des selektierten Prozessdatenpunktes 9. Beispielsweise kann das Visualisierungssystem 5 als entsprechenden Wert den ungewichteten Mittelwert (also die Summe der Werte dividiert durch die Anzahl an Werten) oder den gewichteten Mittelwert (also die Summe der mit einem jeweiligen Wichtungsfaktor gewichteten Werte dividiert durch die Summe der Wichtungsfaktoren) der Werte des selektierten Prozessdatums x, x*, Pi heranziehen. Alternativ kann der Wert des jeweiligen Prozessdatenpunktes 9 beispielsweise durch einen Medianwert bestimmt sein. Der Medianwert kann insbesondere ein xx-%-Medianwert sein, wobei xx ein geeigneter Wert zwischen 0 und 100 (Grenzen nicht mit inbegriffen) ist. Meist liegt der Wert von xx zwischen 40 und 60.

In einem Schritt S24 ermittelt das Visualisierungssystem 5 sodann das Minimum Min der in diesem Erfassungszeitraum archivierten Werte des selektierten Prozessdatums x, x*, Pi. In einem Schritt S25 prüft das Visualisierungssystem 5, ob das ermittelte Minimum Min einen Minimalwert MIN unterschreitet. Wenn dies der Fall ist, ordnet das Visualisierungssystem 5 dem Prozessdatenpunkt 9 in einem Schritt S26 einen Sekundäralarm A' zu. Anderenfalls wird der Schritt S26 übersprungen. Der Minimalwert MIN kann beispielsweise von der Bedienperson 4 festgelegt werden. Insbesondere kann der Minimalwert MIN derart gewählt werden, dass bei immer kleiner werdendem Prozessdatum x, x*, Pi der Sekundäralarm A' vor dem korrespondierenden Prozessalarm Aj ausgelöst wird.

In einem Schritt S27 ermittelt das Visualisierungssystem 5 sodann das Maximum Max der in diesem Erfassungszeitraum archivierten Werte des selektierten Prozessdatums x, x*, Pi. In einem Schritt S28 prüft das Visualisierungssystem 5, ob das ermittelte Maximum Max einen Maximalwert MAX überschreitet. Wenn dies der Fall ist, ordnet das Visualisierungssystem 5 dem Prozessdatenpunkt 9 in einem Schritt S29 ebenfalls einen Sekundäralarm A' zu. Anderenfalls wird der Schritt S29 übersprungen. Der Maximalwert MAX kann beispielsweise von der Bedienperson 4 festgelegt werden. Insbesondere kann der Maximalwert MAX derart gewählt werden, dass bei immer größer werdendem Prozessdatum x, x*, Pi der Sekundäralarm A' vor dem korrespondierenden Prozessalarm Aj ausgelöst wird.

In einem Schritt S30 prüft das Visualisierungssystem 5, ob den Prozessdaten x, x*, Pi ein Prozessalarm Aj zugeordnet ist. Wenn dies der Fall ist, ordnet das Visualisierungssystem 5 dem Prozessdatenpunkt 9 in einem Schritt S31 einen der Prozessalarme Aj zu. In der Regel wird im Schritt S31 der Prozessalarm Aj mit der höchsten Priorität zugeordnet. Wenn den Prozessdaten x, x*, Pi kein Prozessalarm Aj zugeordnet ist, wird der Schritt S31 übersprungen.

In einem Schritt S32 prüft das Visualisierungssystem 5, ob es die Schritte S22 bis S31 bereits für alle Prozessdatenpunkte 9 ausgeführt hat. Wenn dies nicht der Fall ist, geht das Visualisierungssystem 5 zu einem Schritt S33 über, in dem das Visualisierungssystem 5 den nächsten Prozessdatenpunkt 9 selektiert. Sodann geht das Visualisierungssystem 5 zum Schritt S22 zurück. Anderenfalls ist die Vorgehensweise von FIG 6 beendet.

Vorstehend wurde eine Vorgehensweise erläutert, bei welcher sowohl die Schritte S24 bis S26 als auch die Schritte S27 bis S29 als auch die Schritte S30 und S31 vorhanden sind. Es sind jedoch ebenso auch Ausgestaltungen möglich, bei denen nur die Schritte S24 bis S26 und die Schritte S27 bis S29 oder nur die Schritte S24 bis S26 und die Schritte S30 und S31 oder nur die Schritte S27 bis S29 und die Schritte S30 und S31 vorhanden sind. Auch sind ebenso Ausgestaltungen möglich, bei denen nur die Schritte S24 bis S26 oder nur die Schritte S27 bis S29 vorhanden sind.

Die Grafik 8 umfasst somit eine Anzahl von Prozessdatenpunkten 9. FIG 5 zeigt einerseits den Verlauf der Prozessdatenpunkte 9. FIG 5 zeigt weiterhin den Verlauf der ermittelten Minima Min und den Verlauf der ermittelten Maxima Max. Weiterhin sind in FIG 5 die ermittelten Sekundäralarme A' und die zugeordneten Prozessalarme Aj mit eingezeichnet.

Es ist möglich, dass die Grafik 8 so an den Bediener 4 ausgegeben wird, wie sie in FIG 5 dargestellt ist. In diesem Fall werden zum einen der zeitliche Verlauf der Prozessdatenpunkte 9 und die Sekundäralarme A' angezeigt. Zum anderen werden auch - soweit ermittelt - die zeitlichen Verläufe der ermittelten Minima Min und der ermittelten Maxima Max angezeigt. Gegebenenfalls werden auch die Prozessalarme Aj mit angezeigt. In diesem Zusammenhang wird daran erinnert, dass die Anzeige der Prozessalarme Aj zwar in der Regel erfolgt, im Rahmen der vorliegenden Erfindung jedoch von untergeordneter Bedeutung ist. Der Vorteil der Darstellung gemäß FIG 5 liegt insbesondere darin, dass in dem Fall, dass der Erfassungszeitraum eines jeweiligen Prozessdatenpunkts 9 mehrere Erfassungszeitpunkte umfasst, anhand des Datenwerts des jeweiligen Prozessdatenpunkts 9 oftmals nicht mehr erkennbar ist, ob und gegebenenfalls warum ein bestimmter Prozessalarm Aj ausgelöst wurde oder ein Sekundäralarm A' ermittelt wurde. Durch die soeben erläuterte Art und Weise der Darstellung wird dem Bediener 4 jedoch die Information vermittelt, warum dies der Fall ist und an welchen Stellen er eine verfeinerte Darstellung von Prozessdaten x, x*, Pi anfordern muss, um eine vollständige Information zu erhalten.

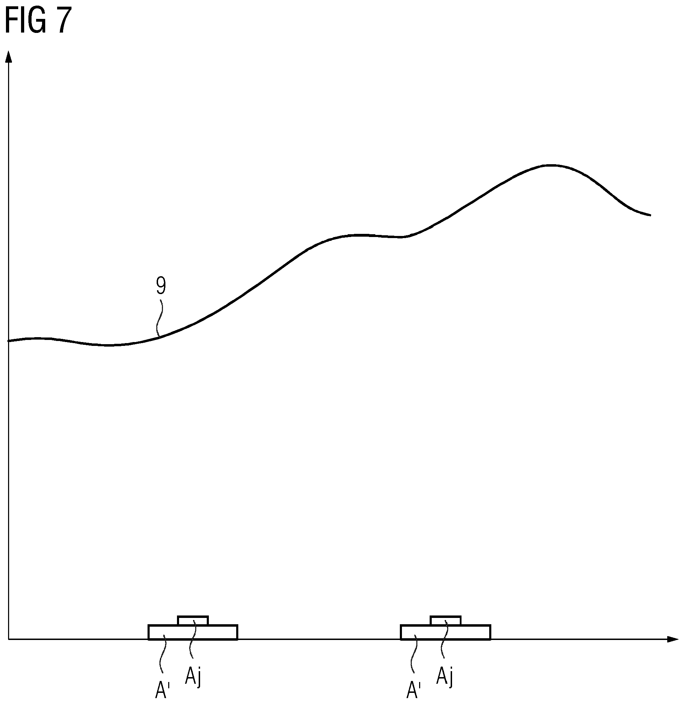

Es ist möglich, dass die Grafik 8 stets entsprechend der Darstellung in FIG 5 an den Bediener 4 ausgegeben wird. Es ist jedoch ebenso möglich, dass der Bediener 4 entsprechend der Darstellung in FIG 1 dem Visualisierungssystem 5 eine Bedieneingabe I+ oder eine hierzu inverse Bedieneingabe I- vorgeben kann. Gibt der Bediener 4 die Bedieneingabe I+ vor, so erfolgt die Ausgabe entsprechend der Darstellung in FIG 5. Gibt der Bediener 4 hingegen die inverse Bedieneingabe I- vor, so erfolgt die Ausgabe entsprechend der Darstellung in FIG 7. Gemäß der Darstellung von FIG 7 werden nur der zeitliche Verlauf der Prozessdatenpunkte 9 und die Sekundäralarme A' (gegebenenfalls zuzüglich der Prozessalarme Aj) angezeigt. Die zeitlichen Verläufe der ermittelten Minima Min und/oder der ermittelten Maxima Max werden hingegen nicht mit angezeigt. Der Bediener 4 kann also nach Bedarf die Anzeige der zeitlichen Verläufe der ermittelten Minima Min und der ermittelten Maxima Max in die Darstellung der Prozessdatenpunkte 9 einblenden oder aus der Darstellung der Prozessdatenpunkte 9 ausblenden. Gegebenenfalls kann die Einblendung bzw. Ausblendung für die Minima Min und die Maxima Max auch einzeln erfolgen.

Der Vorteil der Ausblendung liegt insbesondere darin, dass die Sekundäralarme A' zwar immer noch korrekt ermittelt werden und damit dem Bediener 4 immer noch die Information vermittelt wird, an welchen Stellen er eine verfeinerte Darstellung von Prozessdaten x, x*, Pi anfordern muss, um eine vollständige Information zu erhalten. Der eigentliche Trend, also der zeitliche Verlauf der Prozessdatenpunkte 9, ist aber besser erkennbar.

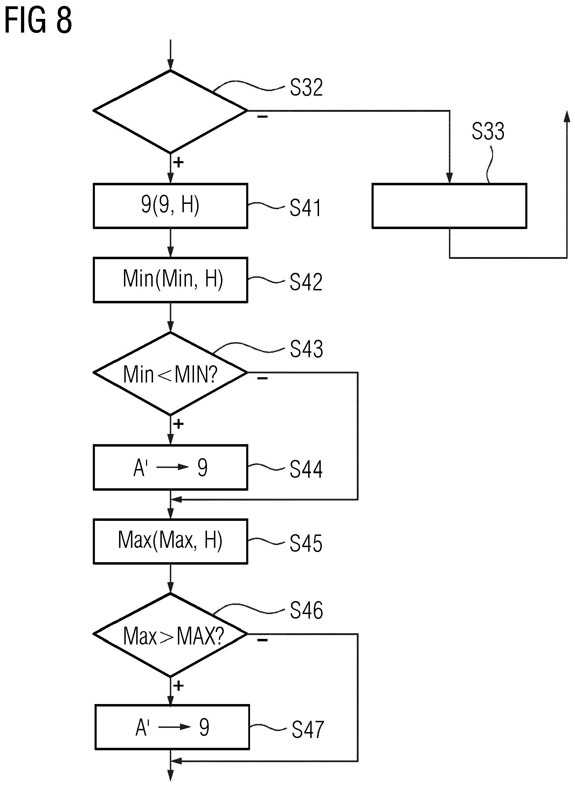

Aufgrund des Umstands, dass der Darstellungszeitraum vom Bediener 4 vorgegeben wird, kann es weiterhin auch geschehen, dass der vorgegebene Darstellungszeitraum die Gegenwart mit umfasst. Beispielsweise kann der Bediener 4 dem Visualisierungssystem 5 vorgeben, dass der Darstellungszeitraum sich von einem in der Vergangenheit liegenden, im Übrigen aber prinzipiell beliebig wählbaren Zeitpunkt (beispielsweise ab einer bestimmten Uhrzeit) bis "jetzt" erstrecken soll oder dass der Darstellungszeitraum sich von "jetzt" für eine gewisse Zeitspanne (beispielsweise 10 Minuten oder 3 Stunden) in die Vergangenheit hinein erstrecken soll. Wenn dies der Fall ist, also die Gegenwart mit umfasst ist, wird die erfindungsgemäße Vorgehensweise vorzugsweise durch die nachfolgend in Verbindung mit FIG 8 erläuterte Vorgehensweise ergänzt.

FIG 8 baut auf der Vorgehensweise von FIG 6 auf. Zusätzlich sind Schritte S41 bis S47 vorhanden. Im Schritt S41 ermittelt das Visualisierungssystem 5 anhand der ermittelten Prozessdatenpunkte 9 - also anhand der für den Darstellungszeitraum ermittelten Prozessdatenpunkte 9 - eine Prognose des zukünftigen Verlaufs der Prozessdatenpunkte 9. Die Ermittlung der Prognose kann so wie im Stand der Technik auch erfolgen. Auf die Details der Ermittlung muss daher nicht näher eingegangen werden.

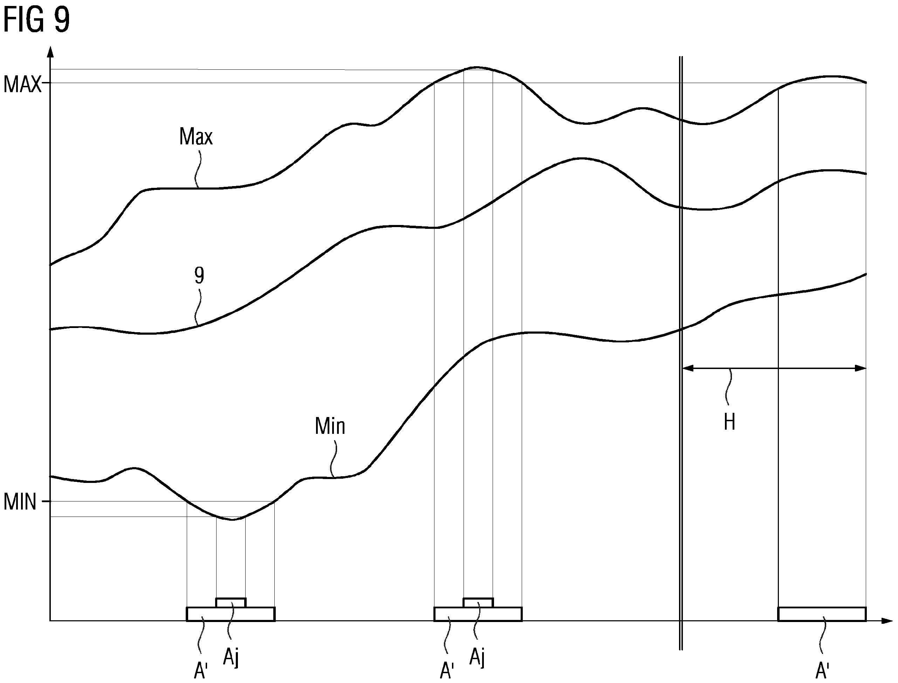

Die Prognose erfolgt für einen Prognosehorizont H. Der Prognosehorizont H reicht gemäß FIG 9 von der Gegenwart in die Zukunft. Es ist möglich, dass das Ausmaß, um welches der Prognosehorizont H in die Zukunft reicht, dem Visualisierungssystem 5 fest vorgegeben ist. Alternativ ist es möglich, dass das Ausmaß von dem Visualisierungssystem 5 in Abhängigkeit von dem vorgegebenen Darstellungszeitraum ermittelt wird, beispielsweise zu einem bestimmten Prozentsatz des Darstellungszeitraums. Alternativ ist es möglich, dass das Ausmaß dem Visualisierungssystem 5 vom Bediener 4 vorgegeben wird. Es gilt jedoch die allgemeine, für jede Prognose gültige Aussage, dass die Prognose unsicherer wird, je weiter sie sich in die Zukunft erstreckt.

Im Schritt S42 ermittelt das Visualisierungssystem 5 anhand der ermittelten Minima Min - also anhand der für den Darstellungszeitraum ermittelten Minima Min - eine Prognose des zukünftigen Verlaufs des Minimums Min. Die Ermittlung der Prognose kann auf die gleiche Art und Weise wie im Schritt S41 erfolgen. Der Unterschied besteht lediglich darin, dass die Grundlage der Ermittlung nicht die Prozessdatenpunkte 9 sind, sondern die Minima Min. Im Schritt S43 prüft das Visualisierungssystem 5, ob ein prognostiziertes Minimum Min den Minimalwert MIN unterschreitet. Wenn dies der Fall ist, ordnet das Visualisierungssystem 5 dem korrespondierenden prognostizierten Prozessdatenpunkt 9 im Schritt S44 einen prognostizierten Sekundäralarm A' zu. Anderenfalls wird der Schritt S44 übersprungen.

Im Schritt S45 ermittelt das Visualisierungssystem 5 anhand der ermittelten Maxima Max - also anhand der für den Darstellungszeitraum ermittelten Maxima Max - eine Prognose des zukünftigen Verlaufs des Maximums Max. Die Ermittlung der Prognose kann auch hier auf die gleiche Art und Weise wie im Schritt S41 erfolgen. Der Unterschied besteht lediglich darin, dass die Grundlage der Ermittlung nicht die Prozessdatenpunkte 9 sind, sondern die Maxima Max. Im Schritt S46 prüft das Visualisierungssystem 5, ob ein prognostiziertes Maximum Max den Maximalwert MAX überschreitet. Wenn dies der Fall ist, ordnet das Visualisierungssystem 5 dem korrespondierenden prognostizierten Prozessdatenpunkt 9 im Schritt S47 ebenfalls einen prognostizierten Sekundäralarm A' zu. Anderenfalls wird der Schritt S47 übersprungen.

Vorstehend wurde eine Vorgehensweise erläutert, bei welcher sowohl die Schritte S42 bis S44 als auch die Schritte S45 bis S47 vorhanden sind. Es sind jedoch ebenso auch Ausgestaltungen möglich, bei denen nur die Schritte S42 bis S44 oder nur die Schritte S45 bis S47 vorhanden sind.

Der Schritt S19 als solcher ist nicht verändert. Im Rahmen des Schrittes S19 erfolgt jedoch entsprechend der Darstellung in FIG 9 nicht nur eine Anzeige der Prozessdatenpunkte 9 für den Darstellungszeitraum, sondern auch eine Anzeige der prognostizierten Prozessdatenpunkte 9. Auch werden für beide Arten von Prozessdatenpunkten 9 die jeweils zugehörigen Sekundäralarme A' mit angezeigt. Die Anzeige der zeitlichen Verläufe des Minimums Min und des Maximums Max kann nach Bedarf und wie in FIG 9 dargestellt erfolgen oder ausgeblendet sein. Nach Bedarf können weiterhin für den Darstellungszeitraum die zugehörigen Prozessalarme Aj mit angezeigt werden. Der Zeitpunkt "jetzt", also die Gegenwart, ist in FIG 9 durch eine vertikale Doppellinie angedeutet.

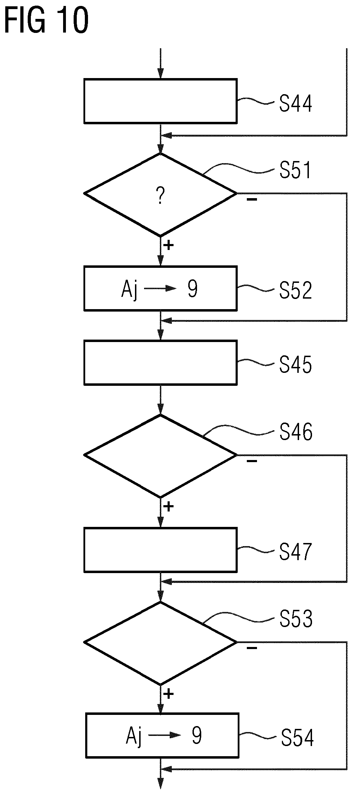

Sofern für den Darstellungszeitraum die zugehörigen Prozessalarme Aj mit angezeigt werden, ist die Vorgehensweise von FIG 8 vorzugsweise entsprechend der Darstellung in FIG 10 ergänzt. Gemäß FIG 10 sind die Schritte S42 bis S44 durch Schritte S51 und S52 ergänzt und die Schritte S45 bis S47 durch Schritte S53 und S54 ergänzt.

Im Schritt S51 prüft das Visualisierungssystem 5, ob ein prognostiziertes Minimum Min die auslösende Bedingung erfüllt. Wenn dies der Fall ist, ordnet das Visualisierungssystem 5 dem korrespondierenden prognostizierten Prozessdatenpunkt 9 im Schritt S52 einen prognostizierten Prozessalarm Aj zu. Anderenfalls wird der Schritt S52 übersprungen.

Im Schritt S53 prüft das Visualisierungssystem 5, ob ein prognostiziertes Maximum Max die auslösende Bedingung erfüllt. Wenn dies der Fall ist, ordnet das Visualisierungssystem 5 dem korrespondierenden prognostizierten Prozessdatenpunkt 9 im Schritt S54 ebenfalls einen prognostizierten Prozessalarm Aj zu. Anderenfalls wird der Schritt S54 übersprungen.

Falls die Schritte S51 und S52 und/oder die Schritte S53 und S54 vorhanden sind, werden entsprechend der Darstellung in FIG 9 zusätzlich zu den vom Prozessleitsystem 2 übermittelten tatsächlichen Prozessalarmen Aj auch die prognostizierten Prozessalarme Aj mit angezeigt.

Vorstehend wurde die Erfindung im Kern und weiterhin in verschiedenen vorteilhaften Ausgestaltungen erläutert. In ihrem Kern betrifft die vorliegende Erfindung jedoch folgenden Sachverhalt:
Eine industrielle technische Anlage 1 wird von einem Prozessleitsystem 2 gesteuert und überwacht. Es erfasst zu Erfassungszeitpunkten jeweils Prozessdaten x, x*, Pi und archiviert die erfassten Prozessdaten x, x*, Pi im Sinne einer Historie. Ein Visualisierungssystem 5 fordert vom Prozessleitsystem 2 aufgrund der Selektion eines Prozessdatums x, x*, Pi und der Vorgabe eines zugehörigen Darstellungszeitraums durch eine Bedienperson 4 für diesen Darstellungszeitraum die Historie des selektierten Prozessdatums x, x*, Pi an und gibt den zugehörigen zeitlichen Verlauf als Grafik 8 an die Bedienperson 4 aus. Die Grafik 8 umfasst eine Anzahl von Prozessdatenpunkten 9. Das Visualisierungssystem 5 ermittelt den jeweiligen Prozessdatenpunkt 9 als Mittelwert oder Medianwert der Werte des selektierten Prozessdatums x, x*, Pi eines für den jeweiligen Prozessdatenpunkt 9 charakteristischen jeweiligen Erfassungszeitraums. Es ermittelt für den jeweiligen Prozessdatenpunkt 9 weiterhin auch das Minimum Min und/ oder das Maximum Max der Werte des selektierten Prozessdatums x, x*, Pi während des jeweiligen Erfassungszeitraums. Immer dann, wenn das für den jeweiligen Prozessdatenpunkt 9 ermittelte Minimum Min einen vorgegebenen Minimalwert MIN unterschreitet und/oder das ermittelte Maximum Max einen vorgegebenen Maximalwert MAX überschreitet, zeigt das Visualisierungssystem 5 zusammen mit dem jeweiligen Prozessdatenpunkt 9 einen Sekundäralarm A' an.

Die vorliegende Erfindung weist viele Vorteile auf. Zunächst ist eine Trendanzeige möglich, die für den Bediener 4 intuitiv leichter erfassbar und verständlich ist. Weiterhin ergibt sich eine verbesserte Prognose insbesondere bezüglich zukünftig zu erwartender Prozessalarme Aj und Sekundäralarme A'. Vorausschauende Eingriffe des Bedieners 4 in den Prozessablauf der industriellen technischen Anlage 1 werden erleichtert. Es kann weiterhin nicht geschehen, dass aufgrund einer "ungünstigen" Wahl des Darstellungszeitraums Sekundäralarme A' nicht angezeigt werden, die bei einer "günstigen" Wahl des Darstellungszeitraums angezeigt werden. Dies gilt auch für die Darstellung gemäß FIG 7, da auch hier die Ermittlung der Sekundäralarme A' anhand des Minimums Min und/oder des Maximums Max erfolgt, auch wenn das Minimum Mini und das Maximum Max selbst nicht mit angezeigt werden.

### Bezugszeichenliste

- 1: industrielle technische Anlage
- 2: Prozessleitsystem
- 3: Prozessobjekte
- 4: Bediener
- 5: Visualisierungssystem
- 6: Computerprogramm
- 7: Maschinencode
- 8: Grafik
- 9: Prozessdatenpunkte

- Aj: Prozessalarme
- A': Sekundäralarme
- H: Prognosehorizont
- I+, I-: Bedieneingaben
- M: Alarmmeldung
- Max: Maximum
- MAX: Maximalwert
- Min: Minimum
- MIN: Minimalwert
- S1 bis S54: Schritte
- x, x*, Pi: Prozessdaten
- Z: Zustand

## Patentansprüche

1. Visualisierungsverfahren für Prozessdaten (x, x*, Pi) durch ein Visualisierungssystem (5),
- wobei eine industrielle technische Anlage (1) von einem Prozessleitsystem (2) gesteuert und überwacht wird,
- wobei das Prozessleitsystem (2) zu Erfassungszeitpunkten jeweils die Prozessdaten (x, x*, Pi) erfasst und die erfassten Prozessdaten (x, x*, Pi) im Sinne einer Historie archiviert,
- wobei das Visualisierungssystem (5) aufgrund der Selektion eines Prozessdatums (x, x*, Pi) und der Vorgabe eines zugehörigen Darstellungszeitraums durch mindestens eine Bedienperson (4) vom Prozessleitsystem (2) für den vorgegebenen Darstellungszeitraum die Historie des selektierten Prozessdatums (x, x*, Pi) anfordert und den zugehörigen zeitlichen Verlauf als Grafik (8) an die mindestens eine Bedienperson (4) ausgibt,
- wobei die Grafik (8) eine Anzahl von Prozessdatenpunkten (9) umfasst, **dadurch gekennzeichnet, dass**
- das Visualisierungssystem (5) den jeweiligen Prozessdatenpunkt (9) anhand der Werte des selektierten Prozessdatums (x, x*, Pi) eines für den jeweiligen Prozessdatenpunkt (9) charakteristischen jeweiligen Erfassungszeitraums ermittelt, wobei der Erfassungszeitraum eine Mehrzahl an Erfassungszeitpunkten umfasst,
- der jeweilige Prozessdatenpunkt (9) ein Mittelwert oder ein Medianwert der Prozessdaten (x, x*, Pi) des jeweiligen Erfassungszeitraums ist,
- das Visualisierungssystem (5) für den jeweiligen Prozessdatenpunkt (9) auch das Minimum (Min) und/oder das Maximum (Max) der Werte des selektierten Prozessdatums (x, x*, Pi) während des jeweiligen Erfassungszeitraums ermittelt und
- das Visualisierungssystem (5) prüft, ob das für den jeweiligen Prozessdatenpunkt (9) ermittelte Minimum einen vorgegebenen Minimalwert (MIN) unterschreitet und/oder das ermittelte Maximum (Max) einen vorgegebenen Maximalwert (MAX) überschreitet, und das Visualisierungssystem (5) für den Fall, dass eine oder beide Prüfungen positiv sind, zusammen mit dem jeweiligen Prozessdatenpunkt (9) einen Sekundäralarm (A') anzeigt, wobei ein Sekundäralarm (A') einen Alarm darstellt, der nicht vom Prozessleitsystem, sondern vom Visualisierungssystem gesetzt wird.

2. Visualisierungsverfahren nach Anspruch 1,
**dadurch gekennzeichnet ,**
- **dass** die Prozessdaten (x, x*, Pi) innerhalb des Prozessleitsystems (2) einem jeweiligen Prozessobjekt (3) zugeordnet sind,
- **dass** das Prozesssteuerungssystem (2) jeweils automatisch einen Prozessalarm (Aj) setzt, wenn die dem jeweiligen Prozessobjekt (3) zugeordneten Prozessdaten (x, x*, Pi) eine vorbestimmte auslösende Bedingung erfüllen,
- **dass** das Prozesssteuerungssystem (2) für jedes Prozessobjekt (3) zu den Erfassungszeitpunkten auch die momentan gesetzten Prozessalarme (Aj) erfasst und die erfassten Prozessalarme (Aj) im Sinne der genannten Historie archiviert bzw. speichert,
- **dass** das Visualisierungssystem (5) zusammen mit der Historie des selektierten Prozessdatums (x, x*, Pi) für denselben Darstellungszeitraum auch die Historie der dem jeweiligen Prozessobjekt (3) zugeordneten Prozessalarme (Aj) anfordert und
- **dass** das Visualisierungssystem (5) den Prozessdatenpunkten (9) immer dann, wenn während des dem jeweiligen Prozessdatenpunkt (9) zugeordneten Erfassungszeitraums mindestens ein Prozessalarm (Aj) aufgetreten ist, zusammen mit dem jeweiligen Prozessdatenpunkt (9) mindestens einen der Prozessalarme (Aj) mit anzeigt.

3. Visualisierungsverfahren nach Anspruch 2,
**dadurch gekennzeichnet ,**
- **dass** das Visualisierungssystem (5) immer dann, wenn der vorgegebene Darstellungszeitraum die Gegenwart mit umfasst, anhand der ermittelten Prozessdatenpunkte (9) für einen von der Gegenwart in die Zukunft reichenden Prognosehorizont (H) eine Prognose des zukünftigen Verlaufs der Prozessdatenpunkte (9) ermittelt,
- **dass** das Visualisierungssystem (5) in diesem Fall weiterhin auch für den Prognosehorizont (H) anhand der ermittelten Minima (Min) eine Prognose des zukünftigen Verlaufs des Minimums (Min) und/oder anhand der ermittelten Maxima (Max) eine Prognose des zukünftigen Verlaufs des Maximums (Max) ermittelt und
- **dass** das Visualisierungssystem (5) immer dann, wenn ein jeweils prognostiziertes Minimum (Min) den vorgegebenen Minimalwert (MIN) unterschreitet und/oder ein jeweils prognostiziertes Maximum (Max) den vorgegebenen Maximalwert (MAX) überschreitet, zusammen mit dem jeweiligen prognostizierten Prozessdatenpunkt (9) einen prognostizierten Sekundäralarm (A') anzeigt.

4. Visualisierungsverfahren nach Anspruch 3,
**dadurch gekennzeichnet ,**
**dass** das Visualisierungssystem (5) weiterhin immer dann, wenn das jeweils prognostizierte Minimum (Min) und/oder das jeweils prognostizierte Maximum (Max) die vorbestimmte auslösende Bedingung erfüllt, zusammen mit dem jeweiligen prognostizierten Prozessdatenpunkt (9) einen prognostizierten Prozessalarm (Aj) anzeigt.

5. Computerprogramm für ein Visualisierungssystem (5), wobei das Computerprogramm Maschinencode (7) umfasst, der von dem Visualisierungssystem (5) abarbeitbar ist,
- wobei das Visualisierungssystem (5) aufgrund der Abarbeitung des Maschinencodes (7) aufgrund der Selektion eines Prozessdatums (x, x*, Pi) und der Vorgabe eines zugehörigen Darstellungszeitraums durch mindestens eine Bedienperson (4) von einem eine industrielle technische Anlage (1) steuernden und überwachenden und das Prozessdatum (x, x*, Pi) zu Erfassungszeitpunkten erfassenden und jeweils im Sinne einer Historie archivierenden Prozessleitsystem (2) für den vorgegebenen Darstellungszeitraum die Historie des selektierten Prozessdatums (x, x*, Pi) anfordert und den zugehörigen zeitlichen Verlauf als Grafik (8) an die mindestens eine Bedienperson (4) ausgibt,
- wobei die Grafik (8) eine Anzahl von Prozessdatenpunkten (9) umfasst, **dadurch gekennzeichnet, dass**
- das Visualisierungssystem (5) aufgrund der Abarbeitung des Maschinencodes (7) den jeweiligen Prozessdatenpunkt (9) anhand der Werte des selektierten Prozessdatums (x, x*, Pi i) eines für den jeweiligen Prozessdatenpunkt (9) charakteristischen jeweiligen Erfassungszeitraums ermittelt, wobei der Erfassungszeitraum eine Mehrzahl an Erfassungszeitpunkten umfasst,
- der jeweilige Prozessdatenpunkt (9) ein Mittelwert oder ein Medianwert der Prozessdaten (x, x*, Pi i) des jeweiligen Erfassungszeitraums ist, das Visualisierungssystem (5) aufgrund der Abarbeitung des Maschinencodes (7)
- für den jeweiligen Prozessdatenpunkt (9) auch das Minimum (Min) und/oder das Maximum (Max) der Werte des selektierten Prozessdatums (x, x*, Pi) während des jeweiligen Erfassungszeitraums ermittelt und
- immer dann, wenn das für den jeweiligen Prozessdatenpunkt (9) ermittelte Minimum (Min) einen vorgegebenen Minimalwert (MIN) unterschreitet und/oder das ermittelte Maximum (Max) einen vorgegebenen Maximalwert (MAX) überschreitet, zusammen mit dem jeweiligen Prozessdatenpunkt (9) einen Sekundäralarm (A') anzeigt, wobei ein Sekundäralarm (A') einen Alarm darstellt, der nicht vom Prozessleitsystem, sondern vom Visualisierungssystem gesetzt wird.

6. Computerprogramm nach Anspruch 5,
**dadurch gekennzeichnet ,**
- **dass** die Prozessdaten (x, x*, Pi) innerhalb des Prozessleitsystems (2) einem jeweiligen Prozessobjekt (3) zugeordnet sind,
- **dass** das Prozesssteuerungssystem (2) jeweils automatisch einen Prozessalarm (Aj) setzt, wenn die dem jeweiligen Prozessobjekt (3) zugeordneten Prozessdaten (x, x*, Pi) eine vorbestimmte auslösende Bedingung erfüllen, für jedes Prozessobjekt (3) zu den Erfassungszeitpunkten auch die momentan gesetzten Prozessalarme (Aj) erfasst und die erfassten Prozessalarme (Aj) im Sinne der genannten Historie archiviert bzw. speichert und
- **dass** das Visualisierungssystem (5) aufgrund der Abarbeitung des Maschinencodes (7) zusammen mit der Historie des selektierten Prozessdatums (x, x*, Pi) für denselben Darstellungszeitraum auch die Historie der dem jeweiligen Prozessobjekt (3) zugeordneten Prozessalarme (Aj) anfordert und den Prozessdatenpunkten (9) immer dann, wenn während des dem jeweiligen Prozessdatenpunkt (9) zugeordneten Erfassungszeitraums mindestens ein Prozessalarm (Aj) aufgetreten ist, zusammen mit dem jeweiligen Prozessdatenpunkt (9) mindestens einen der Prozessalarme (Aj) mit anzeigt.

7. Computerprogramm nach Anspruch 6,
**dadurch gekennzeichnet ,**
**dass** das Visualisierungssystem (5) aufgrund der Abarbeitung des Maschinencodes (7)
- immer dann, wenn der vorgegebene Darstellungszeitraum die Gegenwart mit umfasst, anhand der ermittelten Prozessdatenpunkte (9) für einen von der Gegenwart in die Zukunft reichenden Prognosehorizont (H) eine Prognose des zukünftigen Verlaufs der Prozessdatenpunkte (9) ermittelt,
- in diesem Fall weiterhin auch für den Prognosehorizont (H) anhand der ermittelten Minima (Min) eine Prognose des zukünftigen Verlaufs des Minimums (Min) und/oder anhand der ermittelten Maxima (Max) eine Prognose des zukünftigen Verlaufs des Maximums (Max) ermittelt und
- immer dann, wenn ein jeweils prognostiziertes Minimum (Min) den vorgegebenen Minimalwert (MIN) unterschreitet und/oder ein jeweils prognostiziertes Maximum (Max) den vorgegebenen Maximalwert (MAX) überschreitet, zusammen mit dem jeweiligen prognostizierten Prozessdatenpunkt (9) einen prognostizierten Sekundäralarm (A') anzeigt.

8. Computerprogramm nach Anspruch 7,
**dadurch gekennzeichnet ,**
**dass** das Visualisierungssystem (5) aufgrund der Abarbeitung des Maschinencodes (7)weiterhin immer dann, wenn das jeweils prognostizierte Minimum (Min) und/oder das jeweils prognostizierte Maximum (Max) die vorbestimmte auslösende Bedingung erfüllt, zusammen mit dem jeweiligen prognostizierten Prozessdatenpunkt (9) einen prognostizierten Prozessalarm (Aj) anzeigt.

9. Visualisierungssystem, wobei das Visualisierungssystem mit einem Computerprogramm (6) nach einem der Ansprüche 5 bis 8 programmiert ist, so dass das Visualisierungssystem im Betrieb die in dem entsprechenden der Ansprüche 5 bis 8 angegebenen Verfahrensschritte ausführt.

## Claims

1. Visualisation method for process data (x, x*, Pi) by a visualisation system (5),
- wherein an industrial technical installation (1) is controlled and monitored by a process control system (2),
- wherein the process control system (2) at acquisition points in time in each case acquires the process data (x, x*, Pi) and the process data (x, x*, Pi) that is acquired is archived in the sense of a history,
- wherein, owing to the selection of an item of process data (x, x*, Pi) and the specification of an associated display period of time by at least one operator (4) of the process control system (2) for the predetermined display period of time, the visualisation system (5) requests the history of the selected item of process data (x, x*, Pi) and outputs the associated temporal curve as a graphic (8) to the at least one operator (4),
- wherein the graphic (8) comprises a number of process data points (9), **characterised in that**
- the visualisation system (5) determines the respective process data point (9) with reference to the values of the selected item of process data (x, x*, Pi) of a respective acquisition period of time that is characteristic of the respective process data point (9), wherein the acquisition period of time comprises a plurality of acquisition points in time,
- the respective process data point (9) is a mean value or a median value of the process data (x, x*, Pi) of the respective acquisition period of time,
- the visualisation system (5) also determines the minimum (Min) and/or the maximum (Max) of the values of the selected item of process data (x, x*, Pi) for the respective process data point (9) during the respective acquisition period of time and
- the visualisation system (5) checks whether the minimum that is determined for the respective process data point (9) is below a predetermined minimum value (MIN) and/or the maximum (Max) that is determined exceeds a predetermined maximum value (MAX) and for the case that one or both checks are positive, the visualisation system (5) displays a secondary alarm (A') together with the respective process data point (9), wherein a secondary alarm (A') represents an alarm that is not set by the process control system but rather is set by the visualisation system.

2. Visualisation method according to claim 1,
**characterised in that**
- the process data (x, x*, Pi) is allocated within the process control system (2) to a respective process object (3),
- the process control system (2) in each case automatically sets a process alarm (Aj) if the process data (x, x*, Pi) that is allocated to the respective process object (3) meets a predetermined triggering condition,
- the process control system (2) for each process object (3) at the acquisition points in time also detects the process alarms (Aj) that are currently set and archives or stores the detected process alarms (Aj) in the sense of the mentioned history,
- the visualisation system (5) together with the history of the selected item of process data (x, x*, Pi) for the same display period of time also requests the history of the process alarms (Aj) that are allocated to the respective process object (3) and
- the visualisation system (5) always then displays the process data points (9) together with the respective process data point (9) of at least one of the process alarms (Aj) if at least one process alarm (Aj) occurs during the acquisition period of time that is allocated to the respective process data point (9).

3. Visualisation method according to claim 2, **characterised in that**
- if the predetermined display period of time includes the present, the visualisation system (5) always then determines a prediction of the future curve of the process data points (9) with reference to the determined process data points (9) for a prediction horizon (H) that reaches from the present into the future,
- in this case for the prediction horizon (H) the visualisation system (5) furthermore also determines a prediction of the future curve of the minimum (Min) with reference to the determined minima (Min) and/or determines a prediction of the future curve of the maximum (Max) with reference to the determined maxima (Max) and
- the visualisation system (5) always then displays a predicted secondary alarm (A') together with the respective predicted process data point (9) if a respective predicted minimum (Min) is below the predetermined minimum value (MIN) and/or a respective predicted maximum (Max) exceeds the predetermined maximum value (MAX).

4. Visualisation method according to claim 3,
**characterised in that**
the visualisation system (5) furthermore always then displays a predicted process alarm (Aj) together with the respective predicted process data point (9) if the respective predicted minimum (Min) and/or the respective predicted maximum (Max) meets the predetermined triggering condition.

5. Computer program for a visualisation system (5), wherein the computer program comprises machine code (7) that can be processed by the visualisation system (5),
- wherein, owing to the processing of the machine code (7) owing to the selection of an item of process data (x, x*, Pi) and the specification of an associated display period of time by at least one operator (4) of a process control system (2) that controls and monitors an industrial technical installation (1) and that acquires the item of process data (x, x*, Pi) at acquisition points in time and in each case archives said item of process data in the sense of a history for the predetermined display period of time, the visualisation system (5) requests the history of the selected item of process data (x, x*, Pi) and outputs the associated temporal curve as a graphic (8) to the at least one operator (4),
- wherein the graphic (8) comprises a number of process data points (9), **characterised in that**
- owing to the processing of the machine code (7), the visualisation system (5) determines the respective process data point (9) with reference to the values of the selected item of process data (x, x*, Pi i) of a respective acquisition period of time that is characteristic of the respective process data point (9), wherein the acquisition period of time comprises a plurality of acquisition points in time,
- the respective process data point (9) is a mean value or a median value of the process data (x, x*, Pi i) of the respective acquisition period of time,
owing to the processing of the machine code (7) the visualisation system (5)
- also determines the minimum (Min) and/or the maximum (Max) of the values of the selected item of process data (x, x*, Pi) for the respective process data point (9) during the respective acquisition period of time and
- always then displays a secondary alarm (A') together with the respective process data point (9) if the minimum (Min) that is determined for the respective data point (9) is below a predetermined minimum value (MIN) and/or the determined maximum (Max) exceeds a predetermined maximum value (MAX), wherein a secondary alarm (A') represents an alarm that is not set by the process control system but rather is set by the visualisation system.

6. Computer program product according to claim 5, **characterised in that**
- the process data (x, x*, Pi) is allocated within the process control system (2) to a respective process object (3),
- the process control system (2) in each case automatically sets a process alarm (Aj) if the process data (x, x*, Pi) that is allocated to the respective process object (3) meets a predetermined triggering condition,
for each process object (3) at the acquisition points in time also detects the process alarms (Aj) that are currently set and
archives or stores the detected process alarms (Aj) in the sense of the mentioned history, and
- owing to the processing of the machine code (7), the visualisation system (5) together with the history of the selected item of process data (x, x*, Pi) for the same display period of time also requests the history of the process alarms (Aj) that are allocated to the respective process object (3) and together with the respective process data points (9) of at least one of the process alarms (Aj) always then displays the process data points (9) if at least one process alarm (Aj) occurs during the acquisition period of time that is allocated to the respective process data point (9).

7. Computer program according to claim 6,
**characterised in that**
owing to the processing of the machine code (7)
- if the predetermined display period of time includes the present, the visualisation system (5) always then determines a prediction of the future curve of the process data points (9) with reference to the determined process data points (9) for a prediction horizon (H) that reaches from the present into the future,
- in this case for the prediction horizon (H) the visualisation system (5) furthermore also determines a prediction of the future curve of the minimum (Min) with reference to the determined minima (Min) and/or determines a prediction of the future curve of the maximum (Max) with reference to the determined maxima (Max), and
- the visualisation system (5) always then displays a predicted secondary alarm (A') together with the respective predicted process data point (9) if a respective predicted minimum (Min) is below the predetermined minimum value (MIN) and/or a respective predicted maximum (Max) exceeds the predetermined maximum value (MAX).

8. Computer program according to claim 7,
**characterised in that**
the visualisation system (5) always then displays a predicted process alarm (Aj) together with the respective predicted process data point (9) if the respective predicted minimum (Min) and/or the respective predicted maximum (Max) meets the predetermined triggering condition.

9. Visualisation system, wherein the visualisation system is programmed using a computer program (6) according to one of claims 5 to 8 with the result that during operation the visualisation system implements the method steps specified in the corresponding one of claims 5 to 8.

## Revendications

1. Procédé de visualisation de données (x, x*, Pi) de processus par un système (5) de visualisation,
- dans lequel on commande et on contrôle une installation (1) technique industrielle par un système (2) de conduite de processus,
- dans lequel le système (2) de conduite de processus détecte, à des instants de détection, respectivement des données (x, x*, Pi) de processus et archive au sens d'un historique les données (x, x*, Pi) de processus détectées,
- dans lequel le système (5) de visualisation demande, sur la base de la sélection d'une donnée (x, x*, Pi) de processus et de la prescription d'un laps de temps de représentation lui appartenant par au moins une personne (4) de service, par le système (2) de conduite de processus pendant le laps de temps de représentation donné à l'avance, l'historique de la donnée (x, x*, Pi) de processus sélectionnée, et donne la courbe en fonction du temps lui appartenant sous la forme d'un graphique (8) à la au moins une personne (4) de service,
- dans lequel le graphique (8) comprend un certain nombre de points (9) de données de processus, **caractérisé en ce que**
- le système (5) de visualisation détermine le point (9) de données de processus respectif, à l'aide des valeurs de la donnée (x, x*, Pi) de processus sélectionnée d'un laps de temps de détection respectif caractérisant le point (9) de données de processus respectif, dans lequel le laps de temps de détection comprend une pluralité d'instants de détection,
- le point (9) de données de processus respectif est une valeur moyenne ou une valeur médiane des données (x, x*, Pi) de processus du laps de temps de détection respectif,
- le système (5) de visualisation détermine, pour le point (9) de données de processus respectif, également le minimum (Min) et/ou le maximum (Max) des valeurs de la donnée (x, x*, Pi) de processus sélectionnée pendant le laps de temps de détection respectif, et
- le système (5) de visualisation contrôle si le minimum déterminé pour le point (9) de données de processus respectif est inférieur à une valeur (MIN) donnée à l'avance et/ou si le maximum (Max) dépasse une valeur (MAX) maximum donnée à l'avance, et le système (5) de visualisation indique, dans le cas où l'un ou les deux contrôles sont positifs, ensemble avec le point (9) de données de processus respectif, une alerte (A') secondaire, dans lequel une alerte (A') secondaire représente une alerte, qui n'est pas donnée par le système de conduite de processus, mais par le système de visualisation.

2. Procédé de visualisation suivant la revendication 1, **caractérisé**
- **en ce que** des données (x, x*, Pi) de processus sont affectées dans le système (2) de conduite de processus à un objet (3) de processus respectif,
- **en ce que** le système (2) de commande de processus donne respectivement automatiquement une alerte (Aj) de processus, si les données (x, x*, Pi) de processus affectées à l'objet (3) de processus respectif satisfont une condition de déclenchement déterminée à l'avance,
- **en ce que** le système (2) de commande de processus détecte, pour chaque objet (3) de processus aux instants de détection, également les alertes (Aj) de processus données instantanément et archive ou met en mémoire, au sens dudit historique, les alertes (Aj) de processus détectées,
- **en ce que** le système (5) de visualisation demande, ensemble avec l'historique de la donnée (x, x*, Pi) de processus sélectionnée pendant le même laps de temps de représentation, également l'historique des alertes (Aj) de processus affectées à l'objet (3) de processus respectif, et
- **en ce que** le système (5) de visualisation indique toujours le point (9) de données de processus lorsque, pendant le laps de temps de détection affecté au point (9) de données de processus respectif, il s'est produit au moins une alerte (Aj) de processus, ensemble avec le point (9) de données de processus respectif, au moins l'une des alertes (Aj) de processus.

3. Procédé de visualisation suivant la revendication 2, **caractérisé**
- **en ce que** le système (5) de visualisation détermine toujours, lorsque le laps de temps de représentation donné à l'avance comprend l'instant présent, à l'aide des points (9) de données de processus déterminés pendant un horizon (H) de pronostic allant de l'instant présent à l'avenir, un pronostic de la courbe à venir des points (9) de données de processus,
- **en ce que** le système (5) de visualisation détermine en outre dans ce cas également, pour l'horizon (H) de pronostic, à l'aide des minimum (Min) déterminés, un pronostic de la courbe à venir du minimum (Min) et/ou, à l'aide des maximums (Max) déterminés, un pronostic de la courbe à venir du maximum (Max), et
- **en ce que** le système (5) de visualisation indique toujours lorsqu'un minimum (Min) pronostiqué respectivement est inférieur à la valeur (MIN) minimum donnée à l'avance et/ou lorsqu'un maximum (Max) pronostiqué respectivement dépasse la valeur (MAX) maximum donnée à l'avance, ensemble avec le point (9) de données processus pronostiqué respectivement, une alerte (A') secondaire pronostiquée.

4. Procédé de visualisation suivant la revendication 3, **caractérisé**
**en ce que** le système (5) de visualisation indique en outre toujours lorsque le minimum (Min) pronostiqué respectivement et/ou le maximum (Max) pronostiqué respectivement satisfait la condition de déclenchement déterminée à l'avance, ensemble avec le point (9) de données de processus pronostiqué respectivement, une alerte (Aj) de processus pronostiquée.

5. Programme d'ordinateur d'un système (5) de visualisation, dans lequel le programme d'ordinateur comprend un code machine (7), qui peut être élaboré par le système (5) de visualisation,
- dans lequel le système (5) de visualisation, sur la base de l'élaboration du code machine (7), sur la base de la sélection d'une donnée (x, x*, Pi) de processus et de la prescription d'un laps de temps de représentation lui appartenant par une personne (4) de service, par un système (2) de conduite de processus commandant et contrôlant une installation (1) technique industrielle et détectant la donnée (x, x*, Pi) de processus à des instants de détection et l'archivant respectivement au sens d'un historique, demande, pour le laps de temps de représentation donné à l'avance, l'historique de la donnée (x, x*, Pi) de processus sélectionnée et donne la courbe en fonction du temps lui appartenant comme graphique (8) à la au moins une personne (4) de service,
- dans lequel le graphique (8) comprend un nombre de points (9) de données de processus, **caractérisé en ce que**
- le système (5) de visualisation détermine, sur la base de l'élaboration du code machine (7), le point (9) de données de processus respectif, à l'aide des valeurs de la donnée (x, x*, Pi) de processus sélectionnée d'un laps de temps de détection respectif caractérisant le point (9) de données de processus respectif, dans lequel le laps de temps de détection comprend une pluralité d'instants de détection,
- le point (9) de données de processus respectif est une valeur moyenne ou une valeur médiane des données (x, x*, Pi) de processus du laps de temps de détection respectif,
le système (5) de visualisation détermine, sur la base de l'élaboration du code machine (7),
- pour le point (9) de données de processus respectif, également le minimum (Min) et/ou le maximum (Max) des valeurs de la donnée (x, x*, Pi) de processus sélectionnée pendant le laps de temps de détection respectif, et
- toujours lorsque le minimum (Min) déterminé pour le point (9) de données de processus respectif est inférieur à une valeur (MIN) minimum donnée à l'avance et/ou le maximum (Max) déterminé dépasse une valeur (MAX) maximum donnée à l'avance indique, ensemble avec le point (9) de données de processus respectif, une alerte (A') secondaire, dans lequel une alerte (A') secondaire représente une alerte, qui n'est pas donnée par le système de conduite de processus, mais par le système de visualisation.

6. Programme d'ordinateur suivant la revendication 5, **caractérisé**
- **en ce que** des données (x, x*, Pi) de processus sont affectées dans le système (2) de conduite de processus à un objet (3) de processus respectif,
- **en ce que** le système (2) de commande de processus donne respectivement automatiquement une alerte (Aj) de processus, si les données (x, x*, Pi) de processus affectées à l'objet (3) de processus respectif satisfont une condition de déclenchement déterminée à l'avance, détecte, pour chaque objet (3) de processus aux instants de détection, également les alertes (Aj) de processus données instantanément et archive ou met en mémoire, au sens dudit historique, les alertes (Aj) de processus détectées,
- **en ce que** le système (5) de visualisation, sur la base de l'élaboration du code machine (7), demande, ensemble avec l'historique de la donnée (x, x*, Pi) de processus sélectionnée pendant le même laps de temps de représentation, également l'historique des alertes (Aj) de processus affectées à l'objet (3) de processus respectif, et indique toujours le point (9) de données de processus lorsque, pendant le laps de temps de détection affecté au point (9) de données de processus respectif, il s'est produit au moins une alerte (Aj) de processus, ensemble avec le point (9) de données de processus respectif, au moins l'une des alertes (Aj) de processus.

7. Programme d'ordinateur suivant la revendication 6,
**caractérisé**
**en ce que** le système (5) de visualisation, sur la base de l'élaboration du code machine (7),
- toujours lorsque le système de visualisation détermine, lorsque le laps de temps de représentation donné à l'avance comprend l'instant présent, à l'aide des points (9) de données de processus déterminés pendant un horizon (H) de pronostic allant de l'instant présent à l'avenir, un pronostic de la courbe à venir des points (9) de données de processus,
- dans ce cas en outre également, pour l'horizon (H) de pronostic, à l'aide des minimum (Min) déterminés, un pronostic de la courbe à venir du minimum (Min) et/ou, à l'aide des maximums (Max) déterminés, un pronostic de la courbe à venir du maximum (Max), et
- toujours lorsqu'un minimum (Min) pronostiqué respectivement est inférieur à la valeur (MIN) minimum donnée à l'avance et/ou lorsqu'un maximum (Max) pronostiqué respectivement dépasse la valeur (MAX) maximum donnée à l'avance, ensemble avec le point (9) de données processus pronostiqué respectivement, une alerte (A') secondaire pronostiquée.

8. Programme d'ordinateur suivant la revendication 7,
**caractérisé**
**en ce que** le système (5) de visualisation, sur la base de l'élaboration du code machine (7), indique, en outre toujours lorsque le minimum (Min) pronostiqué respectivement et/ou le maximum (Max) pronostiqué respectivement satisfait la condition de déclenchement déterminée à l'avance, ensemble avec le point (9) de données de processus pronostiqué respectivement, une alerte (Aj) de processus pronostiquée.

9. Système de visualisation, dans lequel le système de visualisation est programmé par un programme (6) d'ordinateur suivant l'une des revendications 5 à 8, de manière à ce que le système de visualisation exécute en fonctionnement les stades de procédé indiqués dans le programme correspondant des revendications 5 à 8.
